# EUROPÄISCHE PATENTSCHRIFT

(11) **EP 2 603 350 B1**
(45) Veröffentlichungstag und Bekanntmachung des Hinweises auf die Patenterteilung: **11.10.2017**
(21) Anmeldenummer: 11746517.9
(22) Anmeldetag: 05.08.2011
(51) Int. Cl.: B23P 25/00

(54) **DURCH INDUKTIVE ERWÄRMUNG GESTÜTZTE MATERIALBEARBEITUNG, INSBESONDERE ZERSPANEN VON TITANLEGIERUNGEN ODER MATERIALIEN MIT VERGLEICHBAR GERINGEM WÄRMELEITFAKTOR**
MATERIAL PROCESSING ASSISTED BY INDUCTIVE HEATING, IN PARTICULAR MACHINING OF TITANIUM ALLOYS OR MATERIALS HAVING A COMPARABLY LOW THERMAL CONDUCTIVITY FACTOR
USINAGE DE MATÉRIAU ASSISTÉ PAR CHAUFFAGE INDUCTIF, EN PARTICULIER USINAGE PAR ENLÈVEMENT DE COPEAUX D'ALLIAGES DE TITANE OU DE MATÉRIAUX PRÉSENTANT UN FACTEUR DE CONDUCTIVITÉ THERMIQUE COMPARATIVEMENT FAIBLE

(30) Priorität: 10.08.2010 EP 10172397
(43) Veröffentlichungstag der Anmeldung: 19.06.2013
(73) Patentinhaber: Technische Universität Darmstadt, 64285 Darmstadt (DE)
(72) Erfinder: ABELE, Eberhard, 77815 Bühl (DE); HÖLSCHER, Roland, 64283 Darmstadt (DE)
(74) Vertreter: Patentanwälte Olbricht Buchhold Keulertz
(86) Internationale Anmeldenummer: PCT/EP2011/063536
(87) Internationale Veröffentlichungsnummer: WO 2012/019971

(56) Entgegenhaltungen:
- DE-B3- 10 332 078
- GB-A- 1 069 996
- JP-A- 60 131 114
- JP-A- 60 232 801
- US-A- 2 412 797
- US-A- 2 600 453
- US-A- 2 706 234
- M. I. Hossain et al: "Enchancement of machinability by workpiece preheating in end milling of Ti-6Al-4V", Journal of Achievements in Materials and Manufacturing Engineering, Bd. 31, Nr. 2 1. Dezember 2008 (2008-12-01), Seiten 320-326, XP002602706, Gefunden im Internet: URL:http://www.journalamme.org/papers_vol3 1_2/31223.pdf [gefunden am 2010-09-29]
- Turnad L. Ginta et al: "Improved Tool Life in End Milling Ti-6Al-4V Through Workpiece Preheating", European Journal of Scientific Research, Bd. 27, Nr. 3 2009, Seiten 384-391, XP002602707, ISSN: 1450-216X Gefunden im Internet: URL:http://www.eurojournals.com/ejsr_27_3_ 08.pdf [gefunden am 2010-09-29]

## Beschreibung

Die vorliegende Erfindung betrifft ein Verfahren und eine Vorrichtung zur Materialbearbeitung, insbesondere zum Zerspanen von Titanlegierungen.

Es wird vorgeschlagen durch Induktion, d.h. elektromagnetische Induktion das zu bearbeitende Werkstück-Material definiert zu erwärmen.

### Stand der Technik

Titanlegierungen bieten aus Sicht der Materialeigenschaften viele Vorteile anderen Metallen gegenüber (leicht, hohe Festigkeit, gute Korrosionseigenschaften, etc.). Haben jedoch auch Eigenschaften, welche Titanlegierungen in die Kategorie der schwer zerspanbaren Metalle, gliedern lässt. Unter anderem besitzen Titanlegierungen im Gegensatz (z.B. zu Stählen und Aluminiumlegierungen) einen extrem niedrigen Wärmeleitfaktor, so dass die entstehende Prozesshitze nicht in das Bauteil eindringen kann (somit keine Materialentfestigung) und nicht über den Prozess abgeführt werden kann (Prozessüberhitzung).

Um eine Prozessüberhitzung zu vermeiden wird bis heute mit sehr konventionellen (moderat und langsamen gerade in Bezug auf Schnittgeschwindigkeiten) Prozessparametern gearbeitet. Hauptnachteil ist die extrem geringe Produktivität bei der Zerspanung von Titanlegierungen.

Zur Vermeidung dieses Nachteiles wurde z.B. in der DE 103 32 078 B3 vorgesehen das Verfahren zur Zerspanung von Werkstücken aus Titan-Basislegierungen so zu verändern, dass vor der eigentlichen Spanabhebung eine Erhitzung des Werkstücks in einer wasserstoffhaltigen Atmosphäre, zur Aufnahme von Wasserstoff durch das Werkstück erfolgt und danach eine Abkühlung erfolgt. Nach dem Schritt der Spanabhebung ist dann ein erneutes Erhitzen, unter Vakuum und in einer wasserstoffreien Atmoshpäre, notwendig. Dieses Verfahren ist sehr aufwendig (mehrere Schritte, 2faches Aufheizen, Explosionsschutz etc.) und dadurch mit hohen Kosten verbunden.

"M. L. Hossain et al.: Enhancement of machinability by workpiece preheating in end milling of TI-6AI-4V" beschreibt eine Untersuchung zur spanenden Bearbeitung von einer Titanlegierung, wobei das zu bearbeitende Werkstück durch elektromagnetische Induktion unmittelbar vor der spanenden Bearbeitung erwärmt wird. Dabei wird eine Hochfrequenzinduktionsanlage verwendet und eine Werkstückoberfläche erwärmt, um diese zu erweichen und damit die Bearbeitung zu vereinfachen.

In JP 60 232 801 A ist ein Verfahren zum spanabhebenden Bearbeiten von Materialien, wie beispielsweise einer Titanlegierung, gezeigt, wobei eine Erwärmung mittels Induktion bei niedriger Frequenz unter einer Argongasatmosphäre vorgeschlagen wird.

### Aufgabe

Es ist daher Aufgabe der Erfindung diese Nachteile im Stand der Technik durch Vorsehung eines einfachen Verfahrens und einer entsprechenden Vorrichtung, zu beseitigen.

### Lösung der Aufgabe

Diese Aufgabe wird durch das Verfahren mit den Merkmalen des Anspruchs 1 und durch die Vorrichtung gemäß Anspruch 6 gelöst.

Vorteilhafte Ausführungsbeispiele werden im Folgenden beschrieben oder/und sind in den Unteransprüchen beschrieben.

Durch den Gegenstand der Erfindung soll in Zukunft die Zerspanzeit deutlich verringert werden. Das zu zerspanende Material wird kurz vor dem Zerspanprozess mittels Induktion partiell erhitzt, so dass sich die Materialeigenschaften von Titanlegierungen, wie z.B. die Festigkeit, positiv für die Zerspanung ändern und so die höhere Prozessparameter erreicht werden können.

Die Nachteile im Stand der Technik werden durch die künstliche, d.h. gesonderte, Energieeinbringung in Form von Wärme mittels Induktion in das zu bearbeitende Werkstück-Material beseitigt.

Es wurde gefunden, dass durch die erfindungsgemäße Wärmeeinbringung, sich das Material überraschenderweise derart entfestigt dass sich die Prozessparameter, wie Vorschub etc. deutlich steigern lassen. Das erfindungsgemäße Verfahren ist besonders vorteilhaft, da hiermit die Leistung, die Frequenz, sowie über die Induktorgeometrie der Wärmeeintrag so gesteuert oder auch, bei Vorsehung von Sensoren etc., geregelt werden kann, dass gezielt die Bereiche (gerade durch geeignete Wahl der Einwirktiefe, welche z.B. über die Frequenz und den so genannten Skin-Effekt beeinflussbar ist) erhitzt werden können, welche im direkten nach gelagerten Verfahren abgetragen werden. Ausdrücklich soll hier nochmals erwähnt werden, dass nur die Bereiche erhitzt werden, welche anschließend sofort spanend abgetragen werden.

Die Produktivität bei der Zerspanung von Titanbauteilen kann dadurch deutlich gesteigert werden. Durch die Implementierung der induktiven Erwärmung des Bauteilwerkstoffes lassen sich die Materialeigenschaften positiv im Hinblick auf die Zerspanbarkeit beeinflussen. Die Warmzerspanung mittels induktiver Erwärmung ermöglicht so eine Verbesserung der Zerspanleistung insbesondere von Titanlegierungen.

Es wurden Stichversuche unternommen und diese zeigten ein großes Potential auf. Es wird mit einer Produktivitätssteigerung von min. 100 % gerechnet.

### Ausführungsbeispiele

Die folgenden Abbildungen zeigen verschiedene Ausführungsbeispiele der Anordnungen und damit herstellbaren Vorrichtungen. Es zeigen:
Abb.1: Ti-6AI-4V Eigenschaften bei unterschiedlichen Temperaturen (Quelle: Klossowski, Uwe; Laserunterstütztes Fräsen von TiAI6V4, Shaker Verlag, Aachen, 1999 (Berichte aus der Produktionstechnik; Bd. 99,27).)
Abb. 2: Versuchsaufbau
Abb.3: Induktorfläche, welche dem Bauteil zugewendet ist (Abstand 1mm zum Werkstück)
Abb. 4: Schematische Darstellung Induktorpositionierung/Wärmeeinheit und Fräswerkzeug.

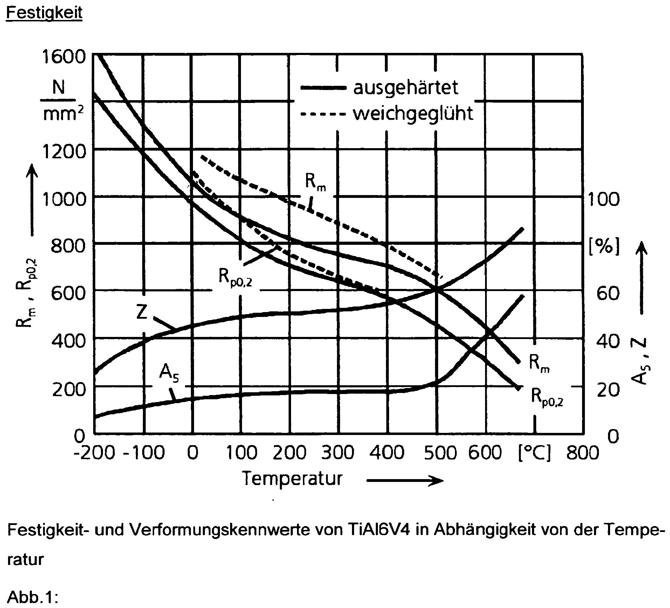

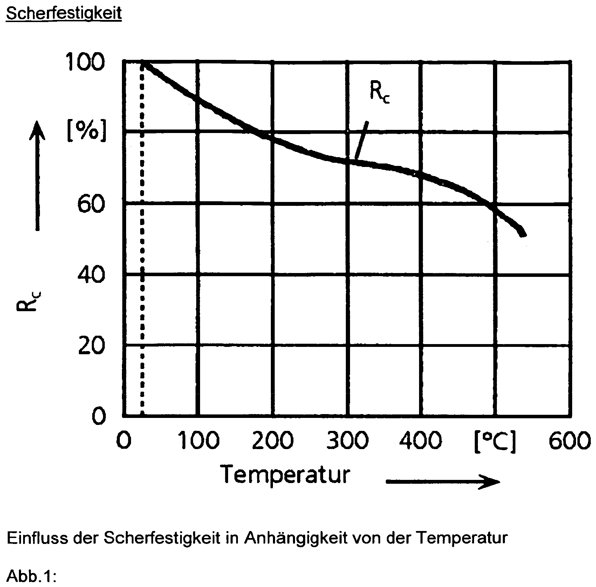

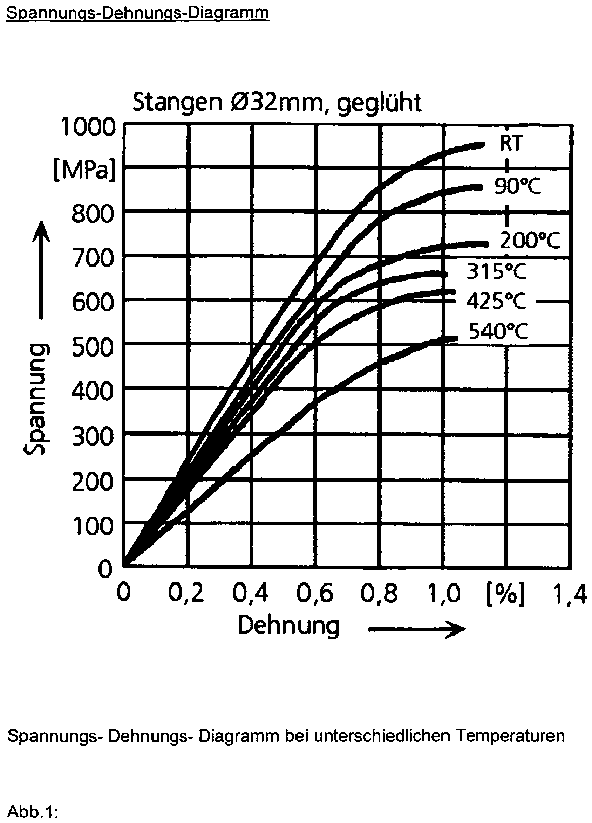

Die Erfindung stellt ein neues Verfahren zur wirtschaftlicheren Zerspanung von Titanlegierungen dar. Hier wird sich die Veränderung von Materialeigenschaften über die Temperatur zu Nutze gemacht. Abb.1 zeigt einige Materialeigenschaften von Ti-6AI-4V in Abhängigkeit von der Werkstofftemperatur. Mit zunehmender Temperatur nimmt die Festigkeit, Scherfestigkeit, E-Modul und die Neigung zur Verfestigung des Materials bei der Zerspanung ab.

Diese positiven Materialänderungen bringen auch positive prozessbezogene Effekte mit sich. Die Schnittkräfte sinken und damit nehmen die Werkzeugbelastungen ab. Der Werkzeugverschleiß sinkt und damit steigert sich die Standzeit und der Strandweg des Werkzeuges. Weiterhin verbessert sich die Spanbildung und das Zeitspanvolumen wird gesteigert. Durch die bessere Zerspanbarkeit lassen sich nun höhere Prozessparameter fahren. So zeigte sich in Stichversuchen, dass die Schnittgeschwindigkeit, im Vergleich zu konventioneller Bearbeitung (v_{c}=40 -100 m/min), auf 200 bis 300 m/min gesteigert werden konnte.

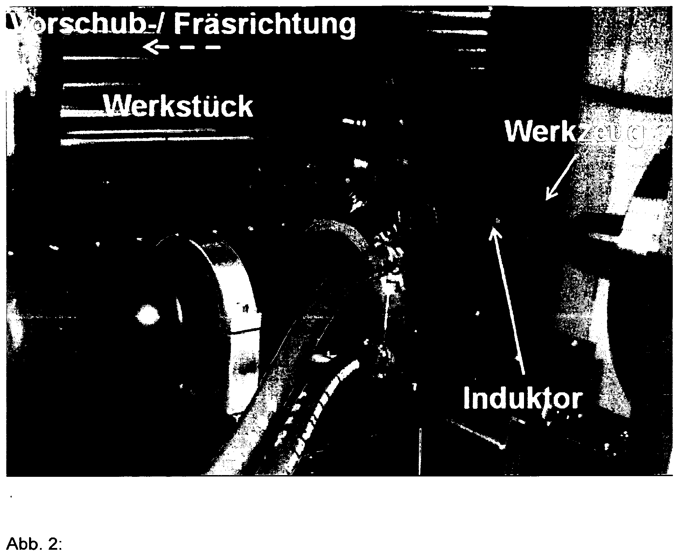

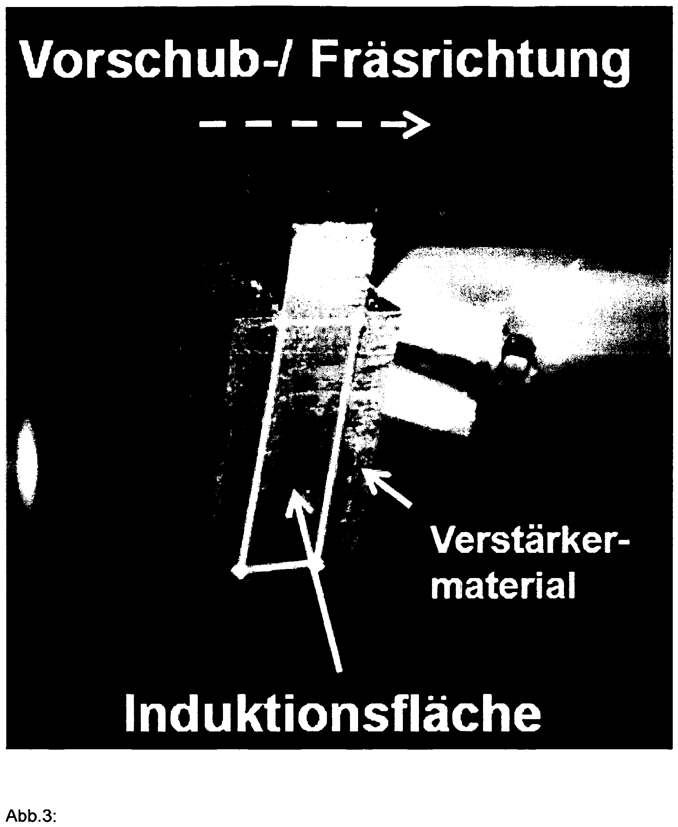

Abb. 2 zeigt den Versuchsaufbau mit dem die ersten Stichversuche unternommen wurden. Es ist der Induktor und das später rotierende Wendeschneidplattenwerkzeug zu sehen. Der Induktor fährt dem Werkzeug in Vorschubrichtung über das Werkstück vor. Der Induktor fährt im Abstand von einem Millimeter über das Werkstück und induziert einen Wirbelstrom und erhitzt somit das Werkstück. Der Mittelstromfrequenzumrichter liefert 18.000 Hz, was zu einer theoretischen und praktischen Einwirktiefe von ca. 3mm führt. Wird die Frequenz herabgesetzt sind höhere Einwirktiefen realisierbar. Erhöht man die Frequenz, werden geringere Einwirktiefen erreicht. Das folgende Werkzeug trägt (welches immer den gleichen Abstand zum Werkzeug besitzt) das erhitzte Werkzeugvolumen ab. In den ersten Versuchen haben sich Werkstücktemperaturen von 200 °C bis 600 °C bewährt. Die erfolgreichsten Zerspanversuche wurden bei Werkstücktemperaturen von 400°C bis 500°C erreicht. Die Abb. 3 zeigt die verwendete Induktorform und kennzeichnet die Breite von 20 mm, welche die Induktionsbreite kennzeichnet.

Der Induktorkörper ist etwa rechteckig und weist in der Mitte, etwa parallel zu der längeren Seite des Rechtecks, eine Abkantung um einen Winkel von ca. 45° auf. Die Dicke des Rechtecks ist ca. 20 mm. Die längere einer Seitenkante mit dieser Dicke bildet die dem Werkstück zugewandte, so genannte Induktionsfläche.

Der Induktorkörper weist, in einer vorteilhaften Ausführungsform des Induktors drei flächige Verstärker/Konzentrator-Elemente auf, welche im unteren Teil des rechteckförmigen Körpers links, rechts und dem Werkstück abgewandten Seite des Körpers so angeordnet sind, dass die Endflächen der Elemente links und rechts etwa bündig mit der Oberfläche der Induktionsfläche abschließen.

Die Verstärker-/Konzentrator-Elemente bestehen dabei aus Ferrotron® 559. Diese können aber auch aus anderen Materialien zur Magnetfeldkonzentration, d.h. Materialien, welche durch eine sehr hohe Permeabilität viele Magnetfeldlinien auf sich vereinen, bestehen.

In einer vorteilhaften Anordnung von Werkstück und Induktor, beträgt der Abstand zwischen Induktionsfläche des Induktors und Werkstück rund 1 mm, vorzugsweise 0,01 mm und ganz bevorzugt 0,001 mm.

In einer Ausführungsform des Induktors, befindet sich im Induktorkörper eine Spule, z.B. aus Kupfer, welche von Kühlmedium unter hohem Druck umströmt und abgekühlt wird. Durch Anlegen von Wechselspannung an der Spule, werden im Werkstück Wirbelströme induziert und das Werkstück wird bei ausreichender Intensität erhitzt. Die Eindringtiefe der Induktion hängt von der Höhe der Frequenz der Wechselspannung ab. Je hochfrequenter die Spannung, umso geringer die Eindringtiefe (Skin-Effekt). Der Grad der Erwärmung ist über die Stromstärke in der Spule und über die Dauer der Stromzufuhr beeinflussbar.

Diese Art der Wärmeeinbringung hat den Vorteil, dass Wärme nicht nur an die Werkstückoberfläche, sondern auch in die Werkstücktiefe geführt wird. Hiermit grenzt sich dieser Verfahren klar dem laserunterstützten Fräsen ab. Ein Laser kann immer nur eine Oberfläche erhitzten und so eine Wärmeeinbringung in der Tiefe nur über Wärmeleitung im Werkstück erreichen.

Der in Abb.3 gezeigte Versuchsaufbau gewährleistet einfache Fräsoperationen. Bei komplexeren Fünfachsfräsoperationen ist darauf zu achten, dass der Induktor und die damit vor gelagerte partielle Erhitzung des zu zerspanenden Materials dem Fräser vorläuft. Dies ist durch einen im Bearbeitungszentrum, an z.B. einem Fünfachsroboterarm relativ einfach zu implementieren.

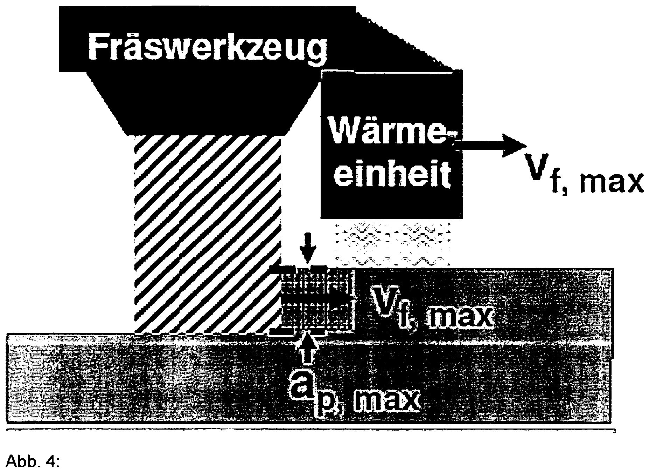

Abb. 4 zeigt eine schematische Darstellung einer erfindungsgemäßen Anordnung, bei welcher der Induktor-als Wärmeeinheit-fest mit dem Fräswerkzeug verbunden, aber diesem im Abstand von 10 mm vorgelagert und im Abstand von 1 mm zur Werkstückoberfläche angeordnet ist.

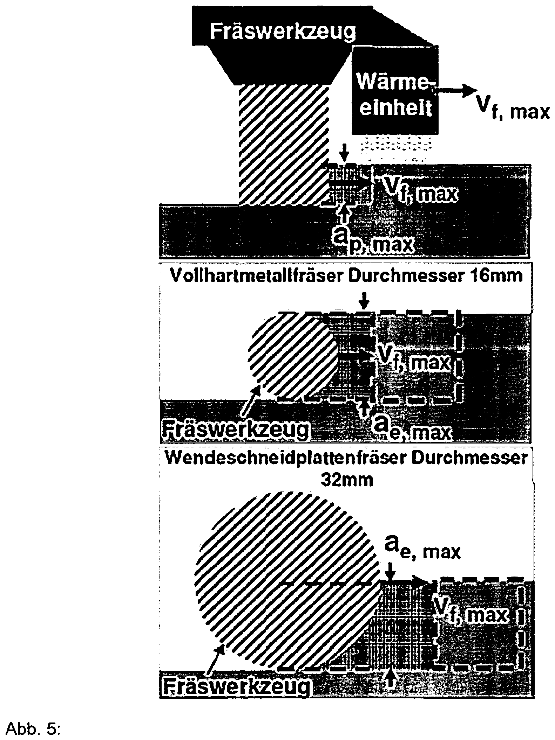

Abb. 5 zeigt eine typische Anwendung der Erfindung und zwar für den Fall des Fräsens. Für das Werkstückmaterial Titan (Ti-6AI-4V) ist bei einem optimalen Bereich von Tₘₐₓ von 600°C und den weiteren Prozessparametern a_{p,max}=16mm, a_{e,max}=16mm (für einen Vollhartmetallfräser mit Durchmesser 16mm oder einen Wendeschneidplattenfräser des gleichen Durchmessers, welcher aber nur zur Hälfte in das Material eintaucht), sowie bei v_{f,max}=16m/min mit einem Aufheizvolumen von 68267 mm³/s gerechnet werden. Typische Generatoren für solche Anwendungen sollten rund 250 kW Leistung aufweisen.

Nicht dargestellt ist eine bevorzugte Ausführungsform einer erfindungsgemäßen Vorrichtung umfassend ein Spanwerkzeug und diesem in Bearbeitungsrichtung vorgelagert, einen Induktor zur Erwärmung des zu bearbeitenden Werkstücks, sowie Temperaturerfassungs- und Vergleichsmittel (zur Bestimmung der Abweichung der Oberflächen-IST-Temperatur des zu erhitzenden Werkstücksteils vom Soll-Wert) zur Regelung der Vorschubgeschwindigkeit oder/und Frequenz der Magnetfeldänderung und/oder der Stromstärke der Magnetfeldänderung, welche vom Induktor ausgeht und/oder Frequenz der Rotation des spanenden Werkzeugs.

Ebenso nicht dargestellt ist die erfindungsgemäße Ausführungsform, welche mehrere, von einander beabstandete, aber dem Werkzeug in Vorschubrichtung vorgelagerte Induktoren umfasst. Zur Erhitzung des Werkstücks in verschiedenen Tiefen weisen diese verschiedene Frequenzen der Änderung des magnetischen Feldes auf. Besonders bevorzugt sind diese Induktoren räumlich so zueinander angeordnet, dass auch nicht direkt zugeordnete Oberflächen- und darunter liegende Bereiche von Werkstücken vor der Erfassung durch das Werkzeug, durch die zwar geringe aber vorhandene Wärmeleitung, erhitzt werden.

Nicht dargestellt ist ein besonders bevorzugtes Ausführungsbeispiel einer Vorrichtung zur erfindungsgemäßen Erhitzung eines Werkstücks durch Induktion, bei welchem der mindestens eine Induktor so ausgeführt ist, dass dieser die räumliche Form des abgebenden sich ändernden Magnetfeldes zeitlich zu ändern vermag, etwa durch Änderung der verwendeten Spulengeometrie. Im Falle von mehreren Induktoren ist der Effekt durch Änderung der relativen Anordnung der Induktoren einstellbar. Dadurch können thermische Schwankungen im Werkstück und damit Quellen von zeitlichen Schwankungen in der maximalen Vorschubgeschwindigkeit vermieden oder zumindest verringert werden.

Nicht dargestellt ist ein weiteres, besonders bevorzugtes Ausführungsbeispiel, bei welchem als Magnetfeldkonzentratoren - zugeordnet zu den Induktoren - solche mit zeitlich veränderlicher Permeabilität, wie z.B. Ferrofluide verwendet werden.

## Patentansprüche

1. Verfahren zum Zerspanen eines Werkstücks aus einer Titanlegierung mit den zeitlich aufeinander folgenden Schritten
i) Erhitzen eines Teiles des zu bearbeitenden Werkstücks durch elektromagnetische Induktion, d.h. durch Aussetzung von Teilen des Werkstücks eines sich ändernden magnetischen Feldes unter Erzeugung von Wirbelströmen in diesem Teil des Werkstücks
ii) spanabhebende Bearbeitung des unmittelbar zuvor erhitzten Teiles des zu bearbeitenden Werkstücks,
**dadurch gekennzeichnet, dass** eine Vorrichtung verwendet wird, die zwei oder mehrere Induktoren aufweist, welche in Bearbeitungsrichtung zu einander beabstandet und jeweils vor dem Werkzeug angeordnet sind, wobei jeder Induktor zur unterschiedlich tiefen Erwärmung des Werkstücks mit einer andere Frequenz der Magnetfeldänderung betrieben wird.

2. Verfahren nach Anspruch 1, **dadurch gekennzeichnet, dass** das Erhitzen durch relative Bewegung eines so genannten Induktors in geringem Abstand zur Oberfläche des zu erhitzenden Teiles des Werkstücks erfolgt, wobei die Geschwindigkeit der Relativbewegung im Wesentlichen der Bearbeitungsgeschwindigkeit der nachfolgenden spanabhebenden Bearbeitung entspricht.

3. Verfahren nach Anspruch 1 bis 2, **dadurch gekennzeichnet, dass** der Induktor in einem Abstand von rund 1 mm, bevorzugt 0,01 mm und besonders bevorzugt 0,001 mm oberhalb der Oberfläche des zu Werkstücks über dieses hinweg geführt.

4. Verfahren nach Anspruch 2 bis 3, **dadurch gekennzeichnet, dass** die relative Bewegung des Induktors geregelt und zwar in Abhängigkeit von der Energieaufnahme des Werkzeugs oder/und von dem Grad der Erhitzung des Werkstücks erfolgt.

5. Verfahren nach Anspruch 2 bis 4, **dadurch gekennzeichnet, dass** die relative Bewegung des Induktors und im Falle der festen Kopplung von Induktor zu Werkzeug, die Vorschubgeschwindigkeit des Werkzeugs im Bereich von 5-10, besonders bevorzugt über 10 m/min beträgt.

6. Vorrichtung zum Zerspanen eines Werkstücks aus einer Titanlegierung, aufweisend eine Werkzeug geeignet zum Zerspanen eines zu bearbeitenden Werkstücks, sowie eine Halterung für dieses, wobei die Vorrichtung, in Bewegungsrichtung der Bearbeitung, unmittelbar vor dem Werkzeug und mit geringem Abstand zum Werkstück angeordnet, einen so genannten Induktor, geeignet zur Erhitzung des Werkstücks durch elektromagnetische Induktion, aufweist, **dadurch gekennzeichnet, dass** die Vorrichtung zwei oder mehrere Induktoren aufweist, welche in Bearbeitungsrichtung zu einander beabstandet und jeweils vor dem Werkzeug angeordnet sind, wobei jeder Induktor eine andere Frequenz der Magnetfeldänderung, geeignet zur unterschiedlich tiefen Erwärmung des Werkstücks, aufweist.

7. Vorrichtung nach Anspruch 6, **dadurch gekennzeichnet, dass** die Vorrichtung Mittel zur Regelung der relativen Bewegung des Induktors zur Oberfläche des Werkstücks aufweist, welche so ausgeführt sind, dass die Relativbewegung in Abhängigkeit der Oberflächentemperatur des erhitzten Werkstückteiles oder/und in Abhängigkeit von der Energieaufnahme des Werkzeugs oder/und der Temperatur der Werkzeugoberfläche, regelbar ausgeführt ist.

8. Vorrichtung nach Anspruch 6 bis 7, **dadurch gekennzeichnet, dass** die Vorrichtung magnetische Linsen, etwa in Form von Helmholtzspulen-Paaren oder/und zwei oder mehrere Induktoren aufweist, welche in Bearbeitungsrichtung zu einander beabstandet und jeweils vor dem Werkzeug angeordnet sind, wobei jeder Induktor eine andere Frequenz der Magnetfeldänderung, geeignet zur unterschiedlich tiefen Erwärmung des Werkstücks, aufweist.

9. Vorrichtung nach Anspruch 6 bis 8, **dadurch gekennzeichnet, dass** die Vorrichtung mehrere, gegeneinander bewegliche Induktoren aufweist, welche geeignet zur Ausbildung verschiedener Formen eines vorzuwärmenden Bereiches, etwa eines Dreiecks etc., ausgeführt sind oder solche vorgefertigten Induktoren in einem der Vorrichtung zugeordneten und im Betrieb erreichbaren Werkzeugmagazin aufweist.

10. Vorrichtung nach Anspruch 6 bis 9, **dadurch gekennzeichnet, dass** die Vorrichtung mindestens einen Induktor mit Magnetfeldkonzentrator aufweist, wobei der Konzentrator eine zeitlich veränderliche Permeabilität, etwa in Form einer Flüssigkeit oder in Form von mechanisch gegeneinander verschieblichen Teilsegmenten aufweist.

## Claims

1. Method for cutting a workpiece from a titanium alloy with the temporal succession of the following steps:
i) Heating a part of the workpiece to be processed by electromagnetic induction, i.e, through exposure of parts of the workpiece of a changing magnetic field under the production of eddy currents in this part of the workpiece.
ii) Machining the part of the workpiece to be treated, heated immediately before,
**characterized in that** a device is used
that comprises two or more inductors,
which are spaced apart from one another in the processing direction and are arranged in front of the tool, each inductor being operated with a different frequency of the magnetic field change for the varied deep heating of the workpiece.

2. Method, according to claim 1, is **thus characterized in that** the heating, which is carried out by relative movement of a so-called inductor at a small distance from the surface of the workpiece to be heated, takes place in such a way that the speed of the relative movement essentially corresponds to the machining speed of the subsequent machining operation.

3. Method, according to claim 1, **characterized in that** the inductor runs over the surface of the workpiece over a distance of approximately 1 mm, preferably 0.01 mm, and particularly preferably 0.001 mm.

4. Method, according to claims 2 to 3, **characterized in that** the relative movement of the inductor is controlled as a function of the energy consumption of the tool and/or the degree of heating of the workpiece.

5. Method, according to claims 2 to 4, **characterized in that** the relative movement of the inductor (and, in the case of the fixed coupling of the inductor to the tool, the feed speed of the tool) is in the range of 5-10 m / min, preferably over 10.

6. Device for cutting a workpiece from a titanium alloy, featuring a tool suitable for cutting a workpiece that is to be machined, as well as a mount for it, whereby the device being arranged in the direction of movement of the machining is directly in front of the tool and at a small distance from the workpiece, a so-called inductor suitable for heating the workpiece by electromagnetic induction, is thus **characterized in that** the device comprises two or more inductors that are spaced apart from one another in the processing direction and are arranged in front of the tool, each inductor having a different frequency of the magnetic field change, suitable for the varied deep heating of the workpiece.

7. Device, according to claim 6, **characterized in that** the device has the means for controlling the relative movement of the inductor to the surface of the workpiece, designed in such a way that the relative movement depends on the surface temperature of the heated workpiece part and/or as a function of the energy consumption of the tool and/or the temperature of the tool surface.

8. Device, according to claims 6 to 7, **characterized in that** the device has magnetic lenses, perhaps in the form of pairs of Helmholtz coils and/or two or more inductors, which are spaced apart from one another in the processing direction and are arranged in front of the tool, in which every inductor has a different frequency of the changing magnetic field, suitable for varied deep heating of the workpiece.

9. Device, according to claims 6 to 8, **characterized in that** the device has several mutually movable inductors that are suitably designed for forming different forms of a region to be pre-heated, such as a triangle, etc., or such prefabricated inductors associated with the device are featured in a company-accessible tool magazine.

10. Device, according to claims 6 to 9, **characterized in that** the device has at least one inductor with a magnetic field concentrator, the concentrator having a temporally variable permeability, perhaps in the form of a fluid or in the form of mechanically mutually displaceable sub-segments.

## Revendications

1. Procédé d'usinage d'une pièce en alliage de titane selon les étapes successives suivantes
i chauffage d'une partie de la pièce à usiner par induction électromagnétique, c'est-à-dire par l'exposition de parties de la pièce à usiner à un champ magnétique variable en générant des courants de Foucault dans ladite partie de la pièce à usiner ;
ii usinage par enlèvement des copeaux de la partie préalablement chauffée de la pièce à usiner
**caractérisées par** l'utilisation d'un dispositif présentant deux ou plus de deux inducteurs, ceux-ci étant écartés les uns des autres suivant le sens d'usinage et disposés devant l'outil. Selon la fluctuation d'intensité d'échauffement de la pièce à usiner, chaque inducteur est actionné avec une différente fréquence de variation du champ magnétique.

2. Procédé selon la revendication 1, **caractérisé par** la procédure d'échauffement selon un mouvement relatif d'un inducteur à proximité de la surface de la partie à chauffer de la pièce à usiner. La vitesse du mouvement relatif correspond essentiellement à la vitesse d'usinage de l'usinage ultérieur par enlèvement des copeaux.

3. Procédé selon les revendications 1 à 2, **caractérisé par** l'introduction de l'inducteur à une distance d'environ 1 mm, de préférence de 0,01 mm et mieux encore de 0,001 mm au-dessus de la surface de la pièce à usiner.

4. Procédé selon les revendications 2 à 3, **caractérisé par** la régulation du mouvement relatif de l'inducteur, ceci en fonction de la consommation d'énergie de l'outil et/ou de la température d'échauffement de la pièce à usiner.

5. Procédé selon les revendications 2 à 4, **caractérisé par** la vitesse d'avancement de l'outil comprise entre 5 et 10 m/min, voire si possible supérieure à 10 m/min. Il s'agit de la vitesse concernant le mouvement relatif de l'inducteur et dans le cas d'un couplage serré entre l'inducteur et l'outil.

6. Dispositif d'usinage d'une pièce en alliage de titane comprenant un outil adapté pour l'usinage d'une pièce à usiner ainsi qu'une fixation pour ladite pièce. Le dispositif, dans le sens de mouvement de l'opération d'usinage, présente immédiatement devant l'outil et à proximité de la pièce à usiner un inducteur adapté pour chauffer la pièce à usiner par induction électromagnétique. Ce dispositif est **caractérisé par** la présence de deux ou plus de deux inducteurs écartés les uns des autres suivant la direction d'usinage et disposés devant l'outil. Chaque inducteur présente une fréquence de variation de champ magnétique différente selon la différence d'intensité d'échauffement de la pièce à usiner.

7. Dispositif selon la revendication 6, **caractérisé par** la possibilité de régler sur le dispositif le mouvement relatif de l'inducteur à la surface de la pièce à usiner. Ces réglages sont conçus de telle sorte que le mouvement relatif soit réglable en fonction de la température de surface de la partie chauffée de la pièce à usiner et/ou en fonction de la consommation d'énergie de l'outil et/ou de la température de la surface de l'outil.

8. Dispositif selon les revendications 6 à 7, **caractérisé par** la présence de lentilles magnétiques au niveau du dispositif, par exemple sous forme d'une paire de bobines de Helmholtz et/ou de deux ou plus de deux inducteurs écartés les uns des autres suivant la direction d'usinage et disposés devant l'outil. Chaque inducteur présente une fréquence de fluctuation de champ magnétique variable en fonction de la différence d'intensité d'échauffement de la pièce à usiner.

9. Dispositif selon les revendications 6 à 8, **caractérisé par** la présence sur le dispositif de plusieurs inducteurs mobiles les uns par rapport aux autres et conçus de sorte à être adaptés pour donner différentes formes à une zone à préchauffer, par exemple un triangle etc. ou que le dispositif présente de tels inducteurs préfabriqués dans un magasin d'outils associé audit dispositif et accessibles pendant le fonctionnement.

10. Dispositif selon les revendications 6 à 9, **caractérisé par** la présence sur le dispositif d'au moins un inducteur avec un concentrateur de champ magnétique. Le concentrateur présente une perméabilité variable dans le temps, par exemple sous forme de liquide ou de segments partiels mécaniquement mobiles les uns par rapport aux autres.
